Europäisches Patentamt

European Patent Office

Office européen des brevets

(19)

(11) Publication number: **0 105 265**
**B1**

(12) # EUROPEAN PATENT SPECIFICATION

(45) Date of publication of patent specification: **06.05.87**

(51) Int. Cl.⁴: **F 16 B 13/06**

(21) Application number: **82902534.5**

(22) Date of filing: **28.07.82**

(86) International application number:
**PCT/GB82/00234**

(87) International publication number:
**WO 83/03645 27.10.83 Gazette 83/25**

(54) AN ANCHOR BOLT.

(30) Priority: **15.04.82 GB 8211011**

(43) Date of publication of application:
**18.04.84 Bulletin 84/16**

(45) Publication of the grant of the patent:
**06.05.87 Bulletin 87/19**

(84) Designated Contracting States:
**AT BE CH DE FR GB LI LU NL SE**

(56) References cited:
**FR-A-2 253 161**
**FR-A-2 321 065**
**FR-A-2 362 299**

(73) Proprietor: **McINTYRE, Douglas Owen**
**The White Cottage Heathfields Royston**
**Hertfordshire (GB)**
(73) Proprietor: **LIMBRICK, Robert William**
**6 Meadow Rise Bewdley**
**Worcestershire (GB)**

(72) Inventor: **McINTYRE, Douglas Owen**
**The White Cottage Heathfields Royston**
**Hertfordshire (GB)**
Inventor: **LIMBRICK, Robert William**
**6 Meadow Rise Bewdley**
**Worcestershire (GB)**

(74) Representative: **Allsop, John Rowland et al**
**c/o Edward Evans & Co. Chancery House 53-64**
**Chancery Lane**
**London, WC2A 1SD (GB)**

Courier Press, Leamington Spa, England.

## Description

The invention relates to an anchor bolt of the type defined in the preamble of claim 1.

A prior art anchor bolt of this type is shown in FR—A—2362299. An anchor bolt described therein has a screw-threaded bolt 6 carrying on its threads a frusto-conical expansion body 10 which engages in a longitudinally split expansion sleeve 11 for anchoring the bolt in a hole. Between the sleeve 11 and a brace 14 adjacent the head of the bolt 6 there is a plastic socket 13 which is collapsed longitudinally on anchorage in the hole. Collapsing of the socket 13 means that the sleeve 11 can be over-expanded with consequent spalling of the material surrounding the hole.

It is an object of the invention therefore to remove the disadvantages of the prior art by providing an anchor bolt which while having the ability to withstand high shear loads, ensures that the object being clamped is pulled down against the bare material so that the fixing is able to withstand vibrational loads.

According to the invention this object is achieved by the features set out in the characterising part of claim 1.

The arrangement defined in Claim 1 obviates the deficiencies of the prior art anchor in that the distance between the abutment on the expansion body and the head of the rod progressively reduces from the moment the anchor rod is turned in the expansion body first to set the expansion sleeve to the required torque, and then to reduce further axially until the object to be clamped is brought firmly against the receiving material and the sleeve occupies or substantially occupies the distance between the abutments.

Moreover the fact that the spacer means is between the outer sleeve and the anchor rod in the anchored or set position, a solid or substantially solid body is formed between the internal surface of the socket and the body of the anchor rod thereby providing the required ability to withstand high shear loads, while the induced load in the bolt from the torque tightening, remains substantially to clamp down the fixture and hence maximise the anti-vibration efficiency.

Preferably the spacer means is a coiled spring held between the abutment on the expansion body and the rod head.

Alternatively the spacer means may comprise a pair of spacer sleeves one of which is press-fit within the outer sleeve and in abutment with the anchor head, the other spacer sleeve being arranged for slidable movement within the outer sleeve as the distance between the abutments is reduced.

The outer sleeve and the first and second spacer sleeves are preferably longitudinally split tubes, the second spacer sleeve abutting the abutment on the expansion body and of lesser outside diameter than the outside diameter of the first spacer sleeve which is positioned within the outer sleeve in press-fit engagement. The outer sleeve is tapered, with its maximum diameter being adjacent the head of the rod and of slightly greater diameter than the receiving socket.

In this way, with the anchor bolt fully tapped home in the socket prior to torquing-up, the outer sleeve is firmly engaged in the socket at the position of maximum taper so preventing the sleeve falling out of the socket when the anchor bolt is used in an overhead application, or if the rod is removed after the anchor has been set.

Other features and advantages of the present invention will become apparent from the description that follows.

Brief Description of the Drawings

Embodiments of the present invention will now be described by way of example with reference to the accompanying drawings wherein:

Figure 1 is a view of an anchor bolt according to an embodiment of the invention;

Figure 2 is a cross-sectional view of an anchor bolt according to another embodiment of the invention and includes a sectional view through the split tube assembly of the bolt;

Figure 3 is a cross-sectional view through an anchor bolt according to another embodiment of the invention;

Figure 4 shows an anchor bolt according to a further embodiment of the invention and includes a cross-sectional view through the bolt;

Figure 5 shows a part cross-sectional view through an anchor bolt according to another embodiment of the invention;

Figure 6 is a cross-sectional view through an anchor bolt according to a still further embodiment of the invention; and

Figure 7 shows the anchor bolt of Figure 4 mounted in-situ and clamping an object to bare material.

Best Modes of Carrying Out the Invention

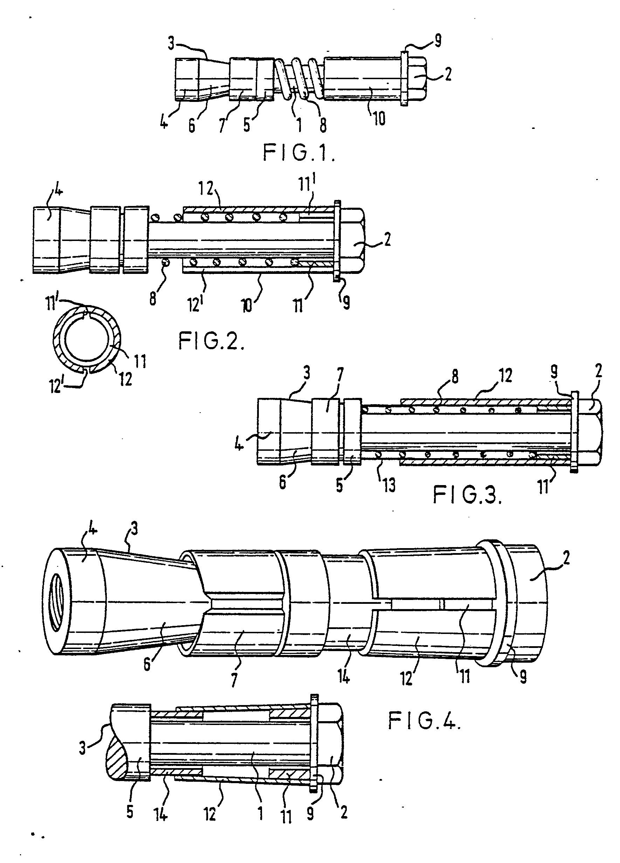

The anchor bolt shown in Figure 1 comprises a threaded anchor rod 1 having a head portion 2 shaped to enable torque to be applied to the rod when setting the anchor bolt.

An expansion body 3 is threadedly received on the anchor rod 1 and has a leading circular head portion 4, a trailing circular head portion 5 and a waisted portion 6 between the head portions 4 and 5 which tapers towards the head 2 of the anchor rod 1.

An expansible tubular split sleeve 7 is mounted on the waisted portion 6 and is of substantially the same diameter as the head portions 4 and 5.

The head portion 5, and the head 2 of the anchor rod 1, form abutments between which is held a coiled spring 8. Normally a washer 9 is interposed between the spring 8 and the head portion 2 as shown.

A plain tubular sleeve 10 of the same diameter as the portions 4 and 5 and sleeve 7, is mounted over a portion of the spring 8 and in abutment with the washer 9.

The anchor bolt as above described operates when used to clamp an object such as a profiled beam to receiving material, as follows.

A socket of the diameter of the head portions 4 and 5, the sleeve and the plain tube 10, is first drilled in a receiving material. A similar hole is drilled, or pre-drilled, through the object to be clamped.

The anchor bolt is then inserted through the hole in the object to be clamped and tapped home in the socket. Application of torque to the head 2 of the anchor 1 causes the expansion body 3 to be drawn axially of the anchor rod 1 thereby expanding the sleeve 7 into gripping contact with the socket to thereby set the anchor bolt. Axial movement of the expansion body 3 during this torquing-up action correspondingly reduces the distance between the head portion 5 and the end of the sleeve 10, and compresses the spring 8. The sleeve 10 is longitudinally dimensioned so that subsequent rotation of the anchor rod 1 in the expansion body 3 further reduces the distance between the sleeve 10 and the abutment 5 until the object to to clamped is firmly held against the receiving material, at which point, the end of the sleeve 10 is in contact with or preferably almost in contact with the abutment or head portion 5.

The combination of the sleeve 10 and the compressed spring 8, spaced between the sleeve and the shank of the anchor rod 1, in the set condition of the fixing provides the anchor with the ability to withstand high shear loads. This coupled with the fact that the object to be clamped is held firmly against the bare material provides all the advantages which the prior art does not possess.

Moreover since the sleeve 10 does not come into contact with the head portion 5 before the object to be clamped is firmly held against the receiving material, any torque loading applied to the anchor rod 1 in an effort to achieve this end, does not go to otherwise uselessly loading the sleeve 10 as with the prior art device, but rather to improve the gripping action of the anchor rod by introducing stress forces acting between the head of the anchor rod 1 and the expansion body 6 through the bare material and along the rod itself to the expansion body 3, and thus between it and the sleeve 7. In this way the anti-vibrational properties of the fixing as a whole are maximised.

The anchor bolt shown in Figure 2 is a modification of the anchor bolt shown in Figure 1, the modification being exemplified in the cross-sectional view of the bolt shown. In this example of the invention, as with the further embodiments to be described, those parts in common with the embodiment of Figure 1 will be given like reference numerals.

Thus in Figure 2 the coiled spring 8 abuts an inner longitudinally split tubular sleeve 11 interposed between the spring 8 and the washer 9.

The inner split sleeve 11 is in friction fit with an outer longitudinally split tubular sleeve 12 of greater longitudinal extent along the axis of the rod 1 than the inner sleeve 11, and positioned over the coiled spring 8.

The arrangement of the longitudinal splits 11' and 12' in the sleeves 11 and 12 is shown in the cross-sectional view through the split sleeve assembly in Figure 2. The splits 11' and 12' are arranged to be diametrically opposed as shown although this is not essential.

The presence of the inner sleeve 11 while retaining the coiled spring 8 within the assembly, serves to fully support the bolt when in shear.

The splits 11' and 12' are introduced so that the sleeves 11 and 12 may be made from strip material and to improve the interference fit between the two sleeves since any variation in diameter is taken up by the induced resilience of the respective split sleeves.

In the embodiment of anchor bolt shown in Figure 3, the whole of the coiled spring between the head portion 5 and the head 2 of the anchor rod 1 is enclosed. This is provided by adding an additional tubular inner split sleeve 13 for movement within the outer tubular split sleeve 12 in the embodiment of Figure 2.

While this arrangement reduces the influence of grit entering between the coils of the spring 8, nevertheless due to the need to make the additional sleeve 13 of thin section so that the maximum diameter of the spring 8 and the thickness of the outer sleeve 13 may be retained, there is a tendency for the assembly to seize up during movement such that full travel can not be ensured.

The embodiment shown in Figure 4 removes these dangers by dispensing with the coiled spring and introducing an additional inner longitudinally split tubular sleeve 14 movable within the outer tubular sleeve 12. This is shown clearly in the cross-sectional view shown in Figure 4. The lengths of the sleeves 11 and 14 are such that when the anchor bolt is fully torqued-up and the object to be clamped is firmly against the receiving material, the sleeves 11 and 14 are in abutment, or substantially so, within the outer sleeve 12 thus introducing solidity between the wall of the socket and the anchor rod 1.

In the embodiment of Figure 4 the additional sleeve 14 is of lesser diameter that the inner sleeve 11 such that the outer sleeve 12 forms a tapered configuration the tapering direction being towards the expansion body 3.

Additionally the diameter of the inner sleeve 11 is such that the diameter of the outer sleeve 12 at this point is a little greater than the diameter of the drilled receiving socket. In this way when the anchor bolt is tapped home in the socket the sleeve is held in friction grip in the socket so that it will not fall out of the socket in an overhead application, upon removal of the anchor rod 1.

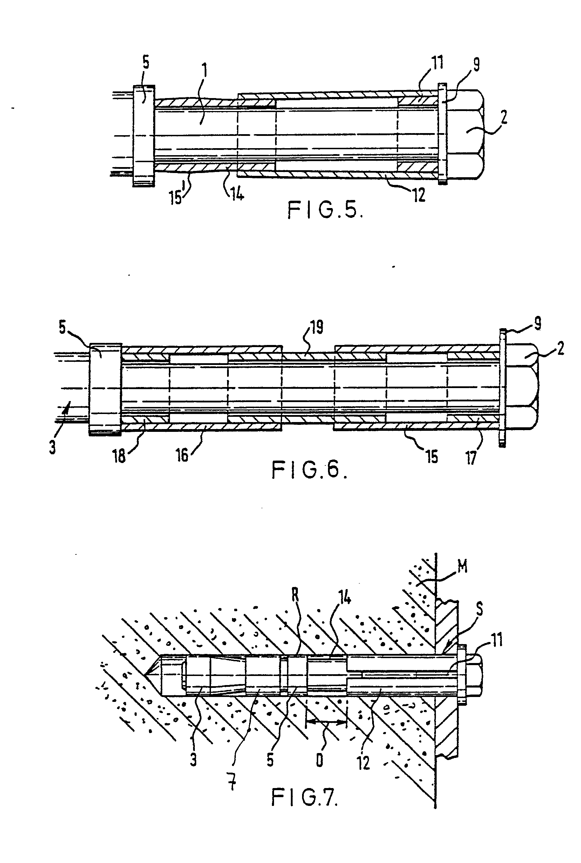

While the arrangement of Figure 4 ensures that a portion of the outer sleeve 12 is in friction fit with the socket, the modification shown in Figure 5, while retaining the tapering properties of the outer sleeve 12, is designed so that the whole extent of the outer surface of the sleeve 12 is in friction fit with the receiving socket in the fully clamped position of the anchor bolt.

To this end the additional sleeve 14 of Figure 4 is provided with a mid-section belled-out portion 15 so that as the outer sleeve 12 moves over the surface of the additional sleeve 14 it is wedged outwardly into gripping contact with the receiving socket.

Due to manufacturing restrictions the length to which the split sleeves of the anchor bolts as described hereinbefore may be made, is restricted. This restriction is overcome by the embodiment shown in Figure 6.

This arrangement comprises two longitudinally split outer tubular sleeves 15 and 16 spaced from one another and each being in abutment respectively with the head 2 of the bolt 1 and the head portion 5 of the expansible body 3.

A shorter split inner tubular sleeve 17 is held in press-fit engagement at the end of the sleeve 15 and in abutment with the washer 9 or head 2 of the anchor rod 1, while a split inner tubular sleeve 18 of similar dimensions is held in press-fit engagement within the outer sleeve 16 and in abutment with the head portion 5.

A further split inner tubular sleeve 19 for sliding movement within the outer sleeves 15 and 16, is situated centrally between the head portion 5 and the washer 9 or head 2, as shown. The relative dimensions of the inner sleeves 17, 18 and 19 is such that with the bolt fully torqued-up and the object to be clamped held hard against the receiving material, the sleeves 15, 16 abut or substantially abut one another, and the sleeve 19 is both in abutment with the sleeves 17 and 18, thereby forming a solid or nearly solid piece of material between the receiving socket and the anchor rod 1.

The centrally situated inner sleeve 19 can be modified according to the sleeve 15 of the embodiment of Figure 5 and of lesser diameter at its entrant portions into the sleeves 15 and 16, to provide the tapering effect of the sleeves 15 and 16 as required.

An anchor bolt of the type as described in Figure 4 is shown in-situ in Figure 7. The position shown corresponds to an arrangement of anchor bolt parts, prior to torquing-up the anchor rod 1. Thus the anchor bolt has been tapped through the hole in the object to be clamped S, is received in the receiving socket R, and a distance D exists between the abutment formed by the expansion body 3 and the end of the outer sleeve 12. As the head 2 of the anchor rod 1 is turned the expansion body 3 moves axially up to the anchor rod 1 to reduce the distance D while at the same time the sleeve 7 is moved into gripping contact with the socket R. When the required setting torque has been achieved the remaining application of effort to the anchor rod 1 forces the object to be clamped S into firm engagement with the receiving material M until the end of the outer sleeve 12 touches, or almost touches, the head portion 5 of the expansion body 3 at which time the inner sleeve 14 abuts, or nearly abuts, the inner sleeve 11.

The material used for the collapsible sleeve arrangements of the devices as above described may be made of a metal or of plastics.

Further other modifications and variations will be apparent to those skilled in the art which are clearly within the scope of the present inventive disclosure.

For example manufacturing limitations may be placed on the lengths of sleeves used in the fixings thereby limiting the lengths of the anchor bolt. To overcome this problem, the embodiments for instance shown in Figure 4 or 5, may be modified by dispensing with the sleeve 11 and having the sleeve 15 of the same length as the outer sleeve 12. Similar considerations apply to the Figure 6 embodiment the main criterion being that throughout the dimensions of the respective sleeves are such that none of the effort imparted to the anchor to achieve a fully torqued-up condition, with the object to be clamped held fast against the bare material, is lost in loading the sleeves. This means that the sleeves must be free to slide relative to one another until the above-mentioned set conditions of the anchor bolt, are achieved.

**Claims**

1. An anchor bolt for engagement in a socket in a receiving material to clamp an object thereto comprising a threaded anchor rod having a head (2), an expansion body (3) threadedly received on the rod in spaced relation to the head, an expansion sleeve (7) expansible by the expansion body (3) into gripping contact with the socket as the rod is threaded into the expansion body, an outer sleeve between the head and expansion body extending around the rod in spaced relation thereto, and a spacer between the expansion body and the outer sleeve, characterized in that the expansion body (3) has an abutment at the end thereof nearest the head, the expansible sleeve (7) being arranged between the abutment (5) and the other end of the expansion body (3), the outer sleeve (10) being dimensioned to bridge substantially the space between the head (2) and the abutment (5) when the bolt (1) is anchored in the socket and the object is pulled tightly against the receiving material, and in that the spacer means (8) lies radially between the rod (1) and the outer sleeve (10) whereby the outer sleeve is slidable over at least part of the spacer means (8) during threading of the rod (1) into the expansion body (3), so that the space between the rod (1) and the outer sleeve (10) is substantially occupied by the spacer means (8) when the bolt is anchored in the socket.

2. An anchor bolt according to Claim 1, characterized by the spacer means (8) comprising a coiled spring (8) held between the abutment (5) of said expansion body (3) and the head (2) of the rod (10).

3. An anchor bolt according to Claim 1, characterized in that the spacer means (8) comprises two spaced further sleeves (11) one of which further sleeves (11) and (14), in that one of the further sleeves (11) is press-fit within the outer sleeve (12) for engagement, together with the outer

sleeve, with the rod head (2), and in that the other of the further sleeves (14) is arranged for slidable movement within the outer sleeve (15) as the rod (1) is threaded into the expansion body (3).

4. An anchor bolt according to Claim 3, characterized in that the one further sleeve (11) is of greater diameter than the other further sleeve (14) and in that the outer sleeve (11) is tapered, with its maximum diameter being adjacent to the rod head (2).

5. An anchor bolt according to Claim 4, characterized in that the other further sleeve (14) has a longitudinally located belled-out portion (15) for progessively straightening the taper of the outer sleeve (12) as the rod is threaded into the expansion body (1).

**Patentansprüche**

1. Verankerungsbolzen zum Eingreifen in eine Vertiefung in einem Aufnahmematerial, um einen Gegenstand daran festzuklammern, mit einem Gewindeankerstift, der einen Kopf (2) aufweist, einem Dehnungskörper (3), der im Abstand vom Kopf auf den Stift geschraubt ist, einer Dehnungshülse (7), die vom Dehnungskörper (3) in Greifkontakt mit der Vertiefung gedehnt werden kann, wenn der Stift in den Dehnungskörper eingeschraubt wird, einer äußeren Hülse zwischen dem Kopf und dem Dehnungskörper, die den Stift im Abstand umgibt, und einem Abstandshalter zwischen dem Dehnungskörper und der äußeren Hülse, dadurch gekennzeichnet, daß der Dehnungskörper (3) einen Anschlag an dem dem Kopf zugewandten Ende aufweist, wobei die Dehnungshülse (7) zwischen dem Anschlag (5) und dem anderen Ende des Dehnungskörpers (3) angeordnet ist, wobei die äußere Hülse (10) so bemessen ist, daß sie im wesentlichen den Raum zwischen dem Kopf (2) und dem Anschlag (5) überbrückt, wenn der Bolzen (1) in der Vertiefung verankert ist und der Gegenstand fest gegen das Aufnahmematerial gezogen. wird, und daß der Abstandshalter (8) radial zwischen dem Stift (1) und der äußeren Hülse (10) liegt, wobei die äußere Hülse über mindestens einen Teil des Abstandshalters (8) schiebbar ist, während der Stift (1) in den Dehnungskörper (3) eingeschraubt wird, so daß der Raum zwischen dem Stift (1) und der äußeren Hülse (10) im wesentlichen vom Abstandshalter (8) eingenommen wird, wenn der Bolzen in der Vertiefung verankert ist.

2. Verankerungsbolzen nach Anspruch 1, dadurch gekennzeichnet, daß der Abstandshalter (8) aus einer Schraubenfeder (8) besteht, die zwischen dem Anschlag (5) des Dehnungskörpers (3) und dem Kopf (2) des Stifts (1) gehalten wird.

3. Verankerungsbolzen nach Anspruch 1, dadurch gekennzeichnet, daß der Abstandshalter (8) zwei mit Abstand voneinander angeordnete weitere Hülsen (11) und (14) aufweist, daß eine der weiteren Hülsen (11) mit Preßsitz innerhalb der äußeren Hülse (12) sitzt, um zusammen mit der äußeren Hülse in den Stiftkopf (2) einzugreifen, und daß die andere der weiteren Hülsen (14) sich innerhalb der äußeren Hülse (15) gleitend bewegen kann, wenn der Stift (1) in den Dehnungskörper (3) eingeschraubt wird.

4. Verankerungsbolzen nach Anspruch 3, dadurch gekennzeichnet, daß die eine weitere Hülse (11) einen größeren Durchmesser als die andere weitere Hülse (14) hat, und daß sich die äußere Hülse (11) verjüngt, wobei ihr größter Durchmesser dem Stiftkopf (2) benachbart ist.

5. Verankerungsbolzen nach Anspruch 4, dadurch gekennzeichnet, daß die andere weitere Hülse (14) einen in Längsrichtung angeordneten ausgebauchten Teil (15) aufweist, um die Verjüngung der äußeren Hülse (12) fortschreitend geradezurichten, wenn der Stift in den Dehnungskörper (1) eingeschraubt wird.

**Revendications**

1. Un boulon d'ancrage prévu pour être engagé dans une douille disposée dans un matériau récepteur afin d'y fixer un objet, comprenant une tige d'ancrage filetée présentant une tête (2) un corps à expansion (3) vissé sur la tige à distance de la tête, un manchon à expansion (7) dilatable par le corps à expansion (3) pour être accroché à la douille au fur et à mesure que la tige est vissée dans le corps à expansion, un manchon externe entre la tête et le corps à expansion s'étendant autour de la tige à distance de celle-ci, et un écarteur entre le corps à expansion et le manchon externe, caractérisé en ce que le corps à expansion (3) présente une butée à son extrémité la plus proche de la tête, le manchon d'expansion dilatable (7) étant disposé entre la butée (5) et l'autre extrémité du corps à expansion (3), le manchon externe (10) étant dimensionné pour ponter sensiblement l'espace entre la tête (2) et la butée (5) lorsque le boulon (1) est ancré dans la douille et que l'objet est plaqué fortement contre le matériau récepteur, et en ce que les moyens (8) formant écarteur sont placés radialement entre la tige (1) et le manchon externe (10) de sorte que le manchon externe peut coulisser sur au moins une partie des moyens (8) formant écarteur pendant le vissage de la tige (1) dans le corps d'expansion (3), si bien que l'espace entre la tige (1) et le manchon externe (10) est occupé sensiblement par le moyen (8) formant écarteur lorsque le boulon est ancré dans la douille.

2. Un boulon d'ancrage selon la revendication 1, caractérisé en ce que les moyens (8) formant écarteur comprennent un ressort hélicoïdal (8) maintenu entre la butée (5) dudit corps à expansion (3) et la tête (2) de la tige (10).

3. Un boulon d'ancrage selon la revendication 1, caractérisé en ce que les moyens (8) formant ecarteur comprennent deux manchons supplémentaires écartés (11, 14), et en ce que le premier des manchons supplémentaires (11) est emmanché à force à l'intérieur du manchon externe (12) pour être en prise, en même temps que le manchon externe, avec la tête (2) de la tige, et en ce que l'autre des manchons supplémentaires (14) est prévu pour se déplacer par coulissement à l'intérieur du manchon externe (15) au fur et à mesure que la tige (1) est vissée dans le corps à expansion (3).

4. Un boulon d'ancrage selon la revendication 3, caractérisé en ce que le premier manchon supplémentaire (11) est de diamètre supérieur à l'autre manchon supplémentaire (14) et en ce que le manchon externe (11) est tronconique, son diamètre maximum étant contigu à la tête (2) de la tige.

5. Un boulon d'ancrage selon la revendication 4, caractérisé en ce que l'autre manchon supplémentaire (14) présente une partie renflée (15) placée longitudinalement afin de redresser progressivement la partie tronconique du manchon externe (12) au fur et à mesure que la tige est vissée dans le corps à expansion (1).

0 105 265

FIG.1.

FIG.2.

FIG.3.

FIG.4.

1

FIG.5.

FIG.6.

FIG.7.